# EUROPÄISCHE PATENTSCHRIFT

(11) **EP 3 269 568 B1**
(45) Veröffentlichungstag und Bekanntmachung des Hinweises auf die Patenterteilung: **15.07.2020**
(21) Anmeldenummer: 17171191.4
(22) Anmeldetag: 16.05.2017
(51) Int. Cl.: B60C 11/12, B60C 11/24

(54) **FAHRZEUGLUFTREIFEN FÜR DEN WINTER- UND GANZJAHRESEINSATZ**
PNEUMATIC TYRE FOR USE IN WINTER AND YEAR-ROUND
PNEUMATIQUE NEIGE OU TOUTE SAISON POUR VÉHICULE AUTOMOBILE

(30) Priorität: 11.07.2016 DE 102016212560
(43) Veröffentlichungstag der Anmeldung: 17.01.2018
(73) Patentinhaber: Continental Reifen Deutschland GmbH, 30165 Hannover (DE)
(72) Erfinder: Jabri, Mohamed Aymen, 30167 Hannover (DE)
(74) Vertreter: Finger, Karsten

(56) Entgegenhaltungen:
- EP-A1- 0 788 900
- WO-A1-2015/185233
- DE-A1-102011 056 427
- US-A1- 2012 035 756
- US-A1- 2013 087 260
- US-A1- 2014 230 983
- US-B1- 6 220 321

## Beschreibung

Die Erfindung betrifft ein Verfahren zum Erhalt der Performance eines Fahrzeugluftreifens für den Winter- oder Ganzjahreseinsatz über dessen Lebensdauer mit einem Laufstreifen, welcher Profilelemente und zwischen diesen Profilelementen angeordnete Umfangs- und/oder Querrillen aufweist, wobei wenigstens ein Profilelement mit einem Feineinschnitt versehen ist, welcher innerhalb des Profilelementes angeordnet ist, sich etwa in radialer Richtung von der Laufstreifenperipherie ins Profilelementinnere erstreckt und korrespondierende Feineinschnittwände aufweist, wobei die Umfangs- und/oder Querrillen eine erste Tiefe und der Feineinschnitt eine zweite Tiefe aufweist, wobei die zweite Tiefe in einem Bereich von 15% - 50% der ersten Tiefe liegt und wobei die zweite Tiefe jedoch mindestens 2mm beträgt.

Es ist bei Laufstreifenprofilen von Winter- und Ganzjahresreifen üblich, Feineinschnitte innerhalb der erhabenen Profilelemente vorzusehen. Feineinschnitte sind Einschnitte, welche innerhalb der Profilelemente wie Profilbänder oder Profilblöcke üblicherweise mit einer Breite von 0,3 mm bis 0,7 mm und mit etwa der gleichen Tiefe wie die Umfangs- und Querrillen angeordnet sind. Die Feineinschnitte dienen bei winterlichen Bedingungen u.a. dazu, Schnee aufzunehmen, um die Schnee/Schnee - Reibung zu erhöhen und derart eine bessere Haftung des Reifens auf winterlicher Fahrbahn zu ermöglichen. Zudem werden eine Vielzahl an Kanten zur Verfügung gestellt, die in die winterliche Fahrbahn eingreifen können. Es ist bekannt, dass ein Zielkonflikt zwischen der vorgenannten Schneeperformance und der Trockenperformance existiert. Denn die Feineinschnitte machen das Profilelement weicher, welches nachteilig für die Reifenperformance unter trockenen Bedingungen, insbesondere für das Bremsen und die Seitenführung ist.

Es gibt eine Vielzahl an bekannten Ausbildungen von Feineinschnitten. Am bekanntesten ist eine Ausbildung, bei der der Feineinschnitt in Profilaufsicht sinusförmig ausgebildet ist und in seinem Tiefenverlauf innerhalb des Profilblockes unverändert ist (2-dimensionaler Feineinschnitt).

Es sind aber auch verschiedenste Feineinschnitte bekannt, deren Ausbildung sich mit dem Tiefenverlauf innerhalb des Profilblockes ändert, z.B. eine veränderliche Amplitude aufweisen (3-dimensionaler Feineinschnitt).

Ein Feineinschnitt reicht zumeist von einer Profilblockwand zur anderen Profilblockwand und quert den Profilblock vollständig, wobei der Feineinschnitt entweder in die an den Profilblock angrenzende Rille münden oder innerhalb des Profilblockes enden kann.

Aus der US 6 220 321 B1 ist ein Nutzfahrzeugreifen bekannt, welcher einen Laufstreifen mit einem am Reifenzenit umlaufenden Profilband aufweist, welches mit Einschnitten versehen ist, die das Profilband in axialer Richtung durchqueren. Aus der US 2014/0230983 A1 ist es ferner bekannt, Profilrippen und Profilblöcke eines Laufstreifenprofils ein Nutzfahrzeugreifens mit einer Vielzahl von parallelen Einschnitten zu versehen, welche jeweils von mehreren kurzen Einschnitten gekreuzt sind. Die US 2013/0087260 A1 offenbart einen Fahrzeugluftreifen mit einem Laufstreifen mit einem Blockprofil, wobei jeder Block von zumindest drei in Draufsicht parallel zueinander und in axialer Richtung verlaufenden Einschnitten durchquert ist, wobei die beiden äußeren Einschnitte seichter ausgeführt sind als der innere Einschnitt bzw. die inneren Einschnitte.

Ferner ist aus der WO 2015/185233 A1 ein Nutzfahrzeugreifen mit einem Laufstreifen mit Umfangsrillen bekannt, welcher in zumindest einer Rille einen Nachschneidindikator aufweist, der in einem Abstand zum Rillengrund an einer Rillenwand ausgebildet ist.

Die DE 10 2011 056 427 A1 offenbart einen Nutzfahrzeugreifen, welcher nach der regulären Laufdauer ohne den Aufwand des Nachschneidens eine Nutzungsverlängerung ermöglichen soll. Der Laufstreifen des Reifens weist Umfangsrillen mit Abriebindikatoren auf, wobei im Bereich von Profilelementen, welche axial an die Abriebindikatoren angrenzen, Einschnitte ausgebildet sind, welche in radialer Richtung tiefer ausgeführt sind als die Umfangsrillen.

Aus der US 2012/0035756 A1 ist ein Verfahren zur Verbesserung der Abriebperformance eines Fahrzeugluftreifens, insbesondere eines Nutzfahrzeugreifens, bekannt. Bei dem Verfahren wird zunächst eine Diagnose hinsichtlich der Tendenz des Reifens, ungleichmäßig abzureiben, gestellt, anschließend wird ein Einschnittmuster ermittelt, mittels welchem sich das Abriebverhalten vergleichmäßigen lassen soll, und im letzten Schritt wird dieses Einschnittmuster am Laufstreifen, beispielsweise mittels eines Lasers, ausgebildet. Durch diese Maßnahme soll der Reifen länger gefahren werden können.

Während der Benützung eines Reifens über dessen Haltbarkeitsdauer verringert sich die Profiltiefe im Laufstreifen deutlich, was zu einer unerwünschten Veränderung der Winter- und Trockenperformance des Reifens führen kann.

Der Erfindung liegt die Aufgabe zu Grunde, ein Verfahren bereitzustellen, mit welchem einem Luftreifen, welcher für den Winter- oder Ganzjahreseinsatz vorgesehen ist, über dessen Lebensdauer eine gleichermaßen gute Schnee- und Trockenperformance verliehen werden kann.

Diese Aufgabe wird durch das Verfahren nach Anspruch 1 gelöst.

Erfindungsgemäß ist ein Luftreifen für den Einsatz im Winter bzw. für den Ganzjahresbetrieb erhalten, welcher Feineinschnitte für die gute Schneeperformance aufweist, wobei die Feineinschnitte jedoch weniger tief als die Umfangs- und/oder Querrillen ausgebildet sind. Dadurch, dass die Feineinschnitte lediglich eine Tiefe aufweisen, welche in einem Bereich von 15% - 50% der Tiefe der Umfangs- und Querrillen liegt, sind die Profilblöcke weniger weich, als wenn die Feineinschnitte die gleiche Tiefe wie die Umfangs- und/oder Querrillen hätten. Hierdurch ist der Zielkonflikt zwischen Schnee-Performance und Trockenperformance auf einem höheren Niveau gelöst. Die Längs- und/oder Querrillen haben ihre nach dem bisher erfolgten Abrieb verbliebene Tiefe. Der Feineinschnitt, welcher als Neureifen eine vergleichsweise geringe Tiefe aufweist, ist nachschneidbar, um die Schneeperformance wieder herzustellen und um den Zielkonflikt Schnee- vs. Trockenperformance über die Lebensdauer des Reifens auf dem höheren Niveau zu erhalten.

Die erste Tiefe ist die Tiefe der Umfangs- und/oder Querrillen. Die erste Tiefe bemisst sich in radialer Richtung von der tiefsten Stelle des Rillengrundes dieser Umfangs- oder Querrille bis zur über der Rille ergänzten Laufstreifenoberfläche, welche sich ergibt, wenn man eine gedachte Einhüllende über die Laufstreifenoberfläche legt. Die zweite Tiefe ist die Tiefe des Feineinschnittes. Die zweite Tiefe bemisst sich in radialer Richtung von der tiefsten Stelle des Rillengrundes dieses Feineinschnittes bis zur über dem Feineinschnitt ergänzten Laufstreifenoberfläche, welche sich ergibt, wenn man eine gedachte Einhüllende über die Laufstreifenoberfläche legt. Die zweite Tiefe liegt in einem Bereich von 15% - 50% der ersten Tiefe, wobei als erste Tiefe die Tiefe der nächstliegenden Umfangs- oder Querrille herangezogen wird.

Vorteilhaft ist es, wenn die Umfangs- und/oder Querrillen eine erste Tiefe und der Feineinschnitt eine zweite Tiefe aufweist, wobei die zweite Tiefe in einem Bereich von 20% - 30% der ersten Tiefe liegt. Hierdurch ist der Zielkonflikt zwischen Schnee- und Trockenperformance auf einem besonders hohen Niveau gelöst.

Vorteilhaft ist es, wenn die Breite des Feineinschnittes in einem Bereich von 1mm - 2mm liegt. Diese Breite entspricht etwa der doppelten Breite von üblichen Feineinschnitten. Durch die vergrößerte Breite ist die Schneeperformance verbessert, da mehr Schnee für die Schnee-/Schneehaftung in dem Feineinschnitt aufgenommen werden kann.

Um schnell und einfach erkennen zu können, ob der Feineinschnitt nachgeschnitten werden muss, ist im Bereich des Laufstreifenprofils ein Nachschneideindikator für den Feineinschnitt angeordnet. Bei einer Resttiefe von vorzugsweise 3 mm sollte der Feineinschnitt nachgeschnitten werden.

In einer Ausführung der Erfindung ist der Feineinschnittgrund über seine Längserstreckung eben als Gerade ausgebildet und verläuft entweder in axialer Richtung oder in einer von der axialen Richtung abweichenden Richtung.

In einer anderen Ausführung der Erfindung ist der Feineinschnittgrund über seine Längserstreckung stufenartig ausgebildet.

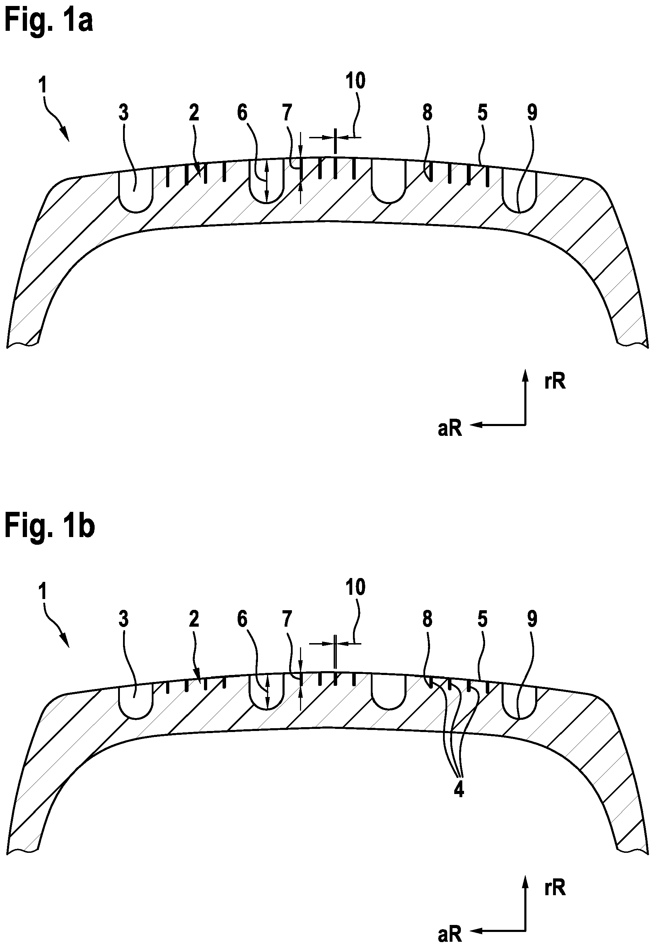

Weitere Merkmale, Vorteile und Einzelheiten der Erfindung werden nun anhand der Zeichnungen, die ein schematisches Ausführungsbeispiel darstellen, näher beschrieben. Dabei zeigen die
Fig. 1a einen Radialschnitt durch den Laufstreifen eines unbenutzten PKW-Winterreifens;
Fig. 1b einen Radialschnitt durch den Laufstreifen eines abgeriebenen PKW-Winterreifens,

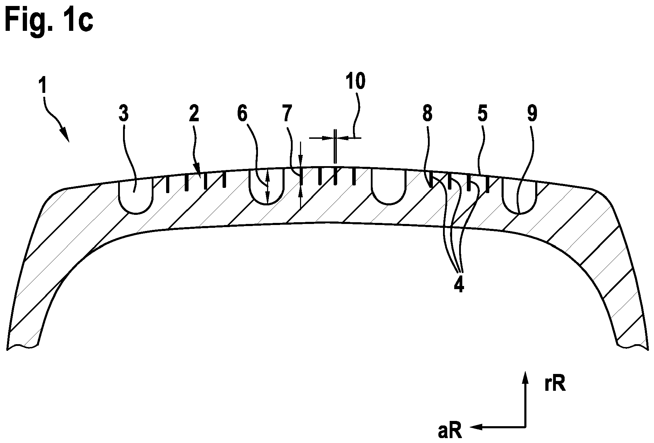

Fig. 1c einen Radialschnitt durch den Laufstreifen eines abgeriebenen, aber in Bezug auf die Feineinschnittiefe nachgeschnittenen PKW-Winterreifens;

Die Fig. 1a zeigt einen Radialschnitt durch den Laufstreifen 1 eines noch unbefahrenen, neuen PKW-Winterreifens. Der Laufstreifen 1 weist Profilelemente 2 und zwischen diesen Profilelementen 2 angeordnete Umfangsrillen 3 auf. Die Profilelemente 2 sind mit einem Feineinschnitt 4 versehen. Die Feineinschnitte 4 sind innerhalb des Profilelementes 2 angeordnet und erstrecken sich etwa in radialer Richtung (rR) von der Laufstreifenperipherie 5 ins Profilelementinnere. Die Umfangsrillen 3 weisen eine erste Tiefe 6 und der Feineinschnitt 4 eine zweite Tiefe 7 auf, wobei die zweite Tiefe 7 in einem Bereich von 20% - 30% der ersten Tiefe 6 liegt, aber mindestens 2mm beträgt. Die Breite 10 des Feineinschnittes 4 liegt in einem Bereich von 1mm - 2mm.

Wird der Reifen gefahren, nutzt sich das Laufstreifenprofil ab. Nach Erreichen eines bestimmten Abriebes ist die zweite Tiefe, diejenige des Feineinschnittes, für eine gute Performance nicht mehr ausreichend, siehe Fig. 1b. In der Fig. 1c sind die Feineinschnitte mittels eines oder mehrerer geeigneter Laser in Bezug auf ihre Tiefe nachgeschnitten. Es werden nicht die Längs- und/oder Querrillen nachgeschnitten, sondern ausschließlich die Feineinschnitte. Dabei werden die Feineinschnitte derart in ihrer Tiefe nachgeschnitten, dass die zweite Tiefe, also die Tiefe der Feineinschnitte, in einem Bereich von 15% - 50% in Bezug auf die erste Tiefe (welche nun die nach dem bisherigen Abrieb verbliebene Tiefe ist) liegen, aber mindestens 2mm beträgt. Die erste Tiefe, also die Tiefe der Umfangs-/oder Querrillen bemisst sich bei dem bereits angefahrenen Reifen nach dem aktuellen, angefahrenen Zustand.
Der Feineinschnittgrund ist über seine Längserstreckung eben und als in axialer Richtung (aR) verlaufende Gerade ausgebildet.

### Bezugszeichenliste

- 1: Laufstreifen
- 2: Profilelement
- 3: Umfangsrille
- 4: Feineinschnitt
- 5: Laufstreifenperipherie
- 6: erste Tiefe (=Tiefe der Umfangsrille)
- 7: zweite Tiefe (=Tiefe des Feineinschnittes)
- 8: Feineinschnittgrund
- 9: Rillengrund
- 10: Breite des Feineinschnittes

- aR: axiale Richtung
- rR: radiale Richtung

## Patentansprüche

1. Verfahren zum Erhalt der Performance eines Fahrzeugluftreifens für den Winter- oder Ganzjahreseinsatz über dessen Lebensdauer mit einem Laufstreifen (1), welcher Profilelemente (2) und zwischen diesen Profilelementen angeordnete Umfangs- und/oder Querrillen (3) aufweist, wobei wenigstens ein Profilelement (2) mit einem Feineinschnitt (4) versehen ist, welcher innerhalb des Profilelementes angeordnet ist, sich etwa in radialer Richtung (rR) von der Laufstreifenperipherie (5) ins Profilelementinnere erstreckt und korrespondierende Feineinschnittwände aufweist, wobei die Umfangs-und/oder Querrillen (3) eine erste Tiefe (6) und der Feineinschnitt eine zweite Tiefe (7) aufweist, wobei die zweite Tiefe in einem Bereich von 15% - 50% der ersten Tiefe (6) liegt und wobei die zweite Tiefe (7) jedoch mindestens 2mm beträgt,
**dadurch gekennzeichnet,**
**dass** der Feineinschnitt (4) in Bezug auf seine Tiefe nach Erreichen seiner kritischen Resttiefe vorzugsweise mittels eines Lasers nachgeschnitten wird, wobei man den Feineinschnitt derart nachschneidet, dass dieser nach dem Nachschneiden eine zweite Tiefe (7) in einem Bereich von 15% - 50% einer ersten, (6), nach dem bisherigen Abrieb verbliebenen Tiefe der Umfangs-und/oder Querrillen aufweist, wobei die nachgeschnittene zweite Tiefe (7) jedoch mindestens 2mm beträgt.

2. Verfahren zum Erhalt der Performance eines Fahrzeugluftreifens für den Winter- oder Ganzjahreseinsatz nach Anspruch 1, **dadurch gekennzeichnet, dass** dessen Umfangs- und/oder Querrillen eine erste Tiefe und der Feineinschnitt eine zweite Tiefe aufweist, wobei die zweite Tiefe (7) in einem Bereich von 20% - 30% der ersten Tiefe (6) liegt und wobei die zweite Tiefe (7) jedoch mindestens 2mm beträgt.

3. Verfahren zum Erhalt der Performance eines Fahrzeugluftreifens für den Winter- oder Ganzjahreseinsatz nach Anspruch 1 oder 2, **dadurch gekennzeichnet, dass** die Breite (10) des Feineinschnittes in einem Bereich von 1mm - 2mm liegt.

4. Verfahren zum Erhalt der Performance eines Fahrzeugluftreifens für den Winter- oder Ganzjahreseinsatz nach einem oder mehreren der vorangehenden Ansprüche, **dadurch gekennzeichnet, dass** im Bereich des Laufstreifenprofils ein oder mehrere Nachschneideindikatoren für den Feineinschnitt angeordnet sind.

5. Verfahren zum Erhalt der Performance eines Fahrzeugluftreifens für den Winter- oder Ganzjahreseinsatz nach einem oder mehreren der vorangehenden Ansprüche, **dadurch gekennzeichnet, dass** der Feineinschnittgrund (8) über seine Längserstreckung eben als Gerade ausgebildet ist, welche sich entweder in axialer Richtung (aR) und in einer von der axialen Richtung abweichenden Richtung erstreckt.

6. Verfahren zum Erhalt der Performance eines Fahrzeugluftreifens für den Winter- oder Ganzjahreseinsatz nach einem oder mehreren der vorangehenden Ansprüche 1 bis 5, **dadurch gekennzeichnet, dass** der Feineinschnittgrund (8) über seine Längserstreckung stufenartig ausgebildet ist.

## Claims

1. Method for maintaining the performance of a pneumatic vehicle tyre for winter or year-round use throughout its lifetime with a tread (1), which has profile elements (2) and circumferential and/or transverse grooves (3) arranged between these profile elements, wherein at least one profile element (2) is provided with a sipe (4), which is arranged within the profile element, extends approximately in the radial direction (rR) from the tread periphery (5) into the interior of the profile element and has corresponding sipe walls, wherein the circumferential and/or transverse grooves (3) have a first depth (6) and the sipe has a second depth (7), wherein the second depth lies in a range of 15% - 50% of the first depth (6) and wherein the second depth (7) is however at least 2 mm,
**characterized**
**in that**, after reaching its critical remaining depth, the sipe (4) is regrooved in terms of its depth, preferably by means of a laser, wherein the sipe is regrooved in such a way that, after the regrooving, it has a second depth (7) in a range of 15% - 50% of a first depth (6), remaining after the previous abrasive wear, of the circumferential and/or transverse grooves, wherein the regrooved second depth (7) is however at least 2 mm.

2. Method for maintaining the performance of a pneumatic vehicle tyre for winter or year-round use according to Claim 1, **characterized in that** its circumferential and/or transverse grooves have a first depth and the sipe has a second depth, wherein the second depth (7) lies in a range of 20% - 30% of the first depth (6) and wherein the second depth (7) is however at least 2 mm.

3. Method for maintaining the performance of a pneumatic vehicle tyre for winter or year-round use according to Claim 1 or 2, **characterized in that** the width (10) of the sipe lies in a range of 1 mm - 2 mm.

4. Method for maintaining the performance of a pneumatic vehicle tyre for winter or year-round use according to one or more of the preceding claims, **characterized in that** one or more regrooving indicators for the sipe are arranged in the region of the tread profile.

5. Method for maintaining the performance of a pneumatic vehicle tyre for winter or year-round use according to one or more of the preceding claims, **characterized in that** the sipe base (8) is formed flat over its longitudinal extent as a straight line which extends either in the axial direction (aR) and in a direction deviating from the axial direction.

6. Method for maintaining the performance of a pneumatic vehicle tyre for winter or year-round use according to one or more of the preceding Claims 1 to 5, **characterized in that** the sipe base (8) is formed in the manner of steps over its longitudinal extent.

## Revendications

1. Procédé permettant de maintenir les performances d'un pneumatique de véhicule pour un usage en hiver ou en toute saison pendant la durée de vie de celui-ci, comprenant une bande de roulement (1) qui présente des éléments de sculpture (2) et des rayures (3) circonférentielles et/ou transversales disposées entre ces éléments de sculpture, dans lequel au moins un élément de sculpture (2) est muni d'une entaille fine (4) qui est disposée à l'intérieur de l'élément de sculpture, s'étend approximativement dans une direction radiale (rR) depuis la périphérie de bande de roulement (5) vers l'intérieur de l'élément de sculpture et présente des parois d'entaille fine correspondantes, dans lequel les rayures (3) circonférentielles et/ou transversales présentent une première profondeur (6) et l'entaille fine présente une deuxième profondeur (7), la deuxième profondeur se trouvant dans une plage de 15 % à 50 % de la première profondeur (6), et la deuxième profondeur (7) mesurant toutefois au moins 2 mm, **caractérisé en ce que** l'entaille fine (4) est retaillée de préférence au moyen d'un laser concernant sa profondeur une fois sa profondeur résiduelle critique atteinte, dans lequel l'entaille fine est retaillée de telle sorte qu'elle présente après le retaillage une deuxième profondeur (7) dans une plage de 15 % à 50 % d'une première profondeur (6) restante après l'usure précédente des rayures circonférentielles et/ou transversales, la deuxième profondeur retaillée (7) mesurant toutefois au moins 2 mm.

2. Procédé permettant de maintenir les performances d'un pneumatique de véhicule pour un usage en hiver ou en toute saison selon la revendication 1, **caractérisé en ce que** les rayures circonférentielles et/ou transversales de celui-ci présentent une première profondeur et l'entaille fine présente une deuxième profondeur, la deuxième profondeur (7) se trouvant dans une plage de 20 % à 30 % de la première profondeur (6), et la deuxième profondeur mesurant toutefois au moins 2 mm.

3. Procédé permettant de maintenir les performances d'un pneumatique de véhicule pour un usage en hiver ou en toute saison selon la revendication 1 ou 2, **caractérisé en ce que** la largeur (10) de l'entaille fine se trouve dans une plage de 1 mm à 2 mm.

4. Procédé permettant de maintenir les performances d'un pneumatique de véhicule pour un usage en hiver ou en toute saison selon une ou plusieurs des revendications précédentes, **caractérisé en ce qu'**un ou plusieurs indicateurs de retaillage sont disposés pour l'entaille fine dans la zone de la sculpture de bande de roulement.

5. Procédé permettant de maintenir les performances d'un pneumatique de véhicule pour un usage en hiver ou en toute saison selon une ou plusieurs des revendications précédentes, **caractérisé en ce que** le fond d'entaille fine (8) est réalisé sur son étendue longitudinale de manière plane sous forme de droite qui s'étend soit dans la direction axiale (aR) et dans une direction divergente de la direction axiale.

6. Procédé permettant de maintenir les performances d'un pneumatique de véhicule pour un usage en hiver ou en toute saison selon une ou plusieurs des revendications précédentes 1 à 5, **caractérisé en ce que** le fond d'entaille fine (8) est réalisé de manière étagée sur son étendue longitudinale.
